Europäisches Patentamt

European Patent Office

Office européen des brevets

(11) Publication number: **0 263 201**

**A1**

## EUROPEAN PATENT APPLICATION

(21) Application number: **86307639.4**

(22) Date of filing: **03.10.86**

(51) Int. Cl.⁴ **F16H 13/06 , F16H 15/56**

(43) Date of publication of application:
**13.04.88 Bulletin 88/15**

(84) Designated Contracting States:
**AT BE CH DE ES FR GB GR IT LI LU NL SE**

(71) Applicant: **T R & R ASSOCIATES**
**20 W. Wisner Street**
**Frederick Maryland 21701(US)**

(72) Inventor: **Vanderlinden, Roy E.**
**11110 Bennie Duncan Road**
**Frederick Maryland 21701(US)**
Inventor: **Francis, John H.**
**Route 3 Box 443**
**Charlestown West Virginia 25414(US)**

(74) Representative: **Russell-Rayner, Albert Patrick**
**RUSSELL-RAYNER Business Centre Avenue**
**One Business Park**
**Letchworth Garden City Hertfordshire SG6**
**2HB(GB)**

(54) **Conical drive.**

(57) Conical drives for changing the speed of an output shaft (12) relative to an input shaft (10) include a conical coupling between the output shaft and and a conical driving member (30;62) within the drive. The output and input shafts are aligned with a first axis (14) and the conical driving member (30;62) rolls around the first axis without slipping while rotating about a second axis (27) disposed obliquely with respect to and intersecting the first axis at a coincidence point (38;85). The apexes of the conical coupling and the conical driving member are coincident with the coincidence point. The conical coupling is utilised with both single and multispeed drives.

FIG. 1

FIG. 2

Xerox Copy Centre

## CONICAL DRIVE

### Background of the Invention

#### 1. Field of the Invention

The instant invention relates to particular types of traction drives utilizing rolling conical surfaces wherein there is no slippage in the drives. More particularly, the instant invention relates to drives utilizing conical surfaces; wherein the apexes of all conical surfaces interacting in the drives are coincident at the same point, and wherein that point is on an axis with which input and output shafts of the drives are aligned.

#### 2. Technical Considerations and Prior Art

Applicants' prior applications, U.S. Patent Applications Serial Number 426,875, filed September 29, 1982; 480,144, filed March 29, 1983; and 691,863, filed January 16, 1985 disclose the concept of utilizing a non-slipping, conical transmission member in a single speed drive, a multi-speed drive and a variable speed drive, respectively. The drives disclosed in these patent applications have numerous advantages over conventional gear drives and other types of transmissions such as conventional traction drives and drives which rely on belts and cones. However, each of the drives disclosed in these patent applications utilize a Cardin constant-velocity joint which has certain disadvantages and inherent inefficiencies. These disadvantages and inefficiencies are not so great as to negate the advantages and efficiencies provided by the drives disclosed in these patent applications, however, none the less, they do exist. Constant-velocity joint generally comprise two Hooke's joints connected together so that a loss in velocity caused by one Hooke's joint is compensated for by a gain in velocity caused by the second Hooke's joint. This loss of velocity and compensation creates a net loss in energy transfer of the system. In addition, constant velocity couplings generally require lubrication and can cause maintenance difficulties.

### Summary of the Invention

It is a feature of the instant invention to provide a new and improved coupling between a conical member driven by an input shaft and an output shaft of a non-slipping traction drive.

In accomplishing this feature, the instant invention contemplates a non-slipping traction drive having an input shaft and an output shaft aligned on a first axis. The input shaft is connected to a member having a conical surface thereon, which conical surfaces has an axis of rotation aligned with a second axis, which second axis is disposed at an angle to the first axis. The conical member is rotatable with respect to the input shaft and has first and second conical surfaces thereon. The first conical surface rolls without slipping on a stationary conical surface and is complimentary to a conical surface on the output shaft. As the conical member rolls on the stationary conical surface, it revolved about the first axis and rotates around the second axis thereby driving the output shaft through engagement with the conical surface on the output shaft.

In accordance with another embodiment of the invention, the conical member has a plurality of conical surfaces thereon, each of which has a complementary, stationary conical surface upon which it can selectively roll. The selection of a stationary surface is made by either rendering a complementary conical surface stationary with respect to the conical member and input shaft or by bringing a stationary surface into engagement with a complementary conical surface on the conical member.

In accordance with one embodiment of the multi-speed drive, the conical member is surrounded by a plurality of annular members having conical surfaces thereon which are free to rotate in a housing surrounding the conical member. Brake means are provided to selectively prevent rotation of one of the annular members so as to cause the conical member to roll thereon while the other annular members spin. In accordance with another embodiment of the invention, the annular members are axially shifted into engagement with a conical surface on the conical member in order to cause the conical member to roll thereon.

## Brief Description of the Drawings

Figure 1 is a side view, in section, with portions cut away, showing a single speed embodiment of the instant invention.

Figure 2 is a side view, in section with portions cut away, showing a multi-speed drive.

## Description of the Preferred Embodiments

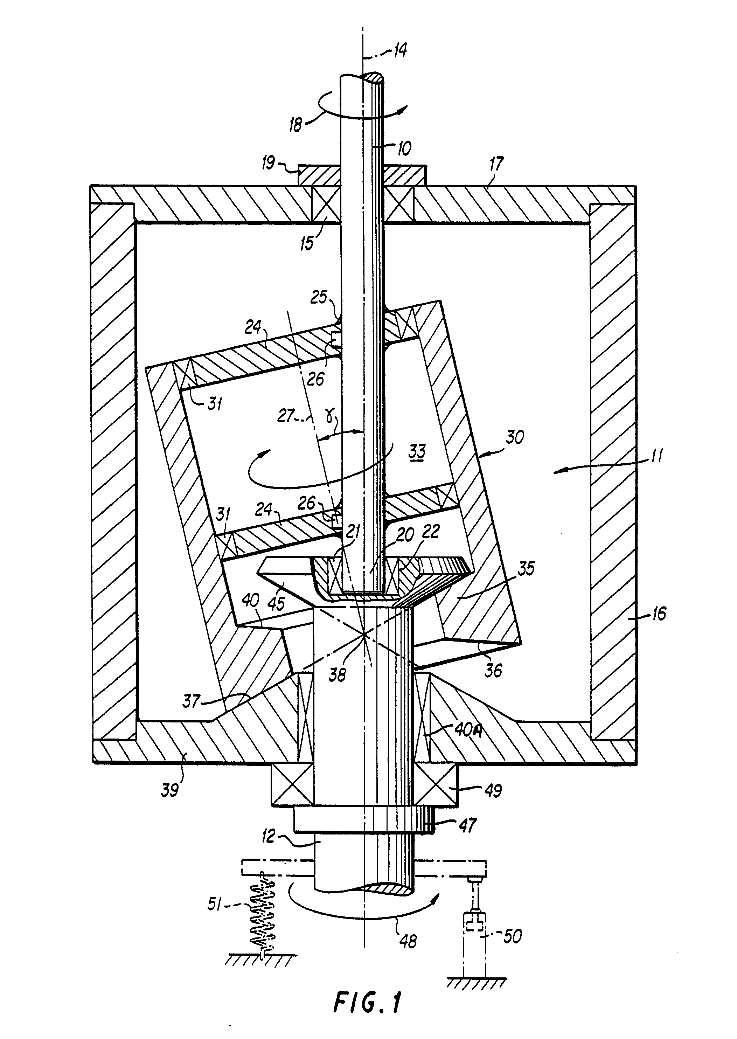

Referring now to the drawings, Figure 1 shows a single speed embodiment of the invention wherein the input speed and input torque on an input shaft 10 is altered by a conical drive, designated generally by the numeral 11, to produce a different speed and different torque on an output shaft 12. The input shaft 10 and output shaft 12 are axially aligned with a first axis 14. The conical drive 11 is contained within a housing 16 which is preferably held stationary with respect to the input shaft 10 and output shaft 12 both of which rotate with respect to the housing.

The input shaft 10 is journaled in a top plate 17 of the housing 16 by a bearing 15. For purposes of this discussion, the input shaft is driven to rotate in the direction of arrow 18 (although the input shaft 10 may rotate in either direction). The input shaft 10 is restrained from movement in an axial direction by collars 19. In accordance with a preferred embodiment, the input shaft 10 has its free end 20 stabilized by being journaled in a bearing 21 seated in a bore 22 in the output shaft 12. Between its free end 20 and the collar 19, the input shaft has a crank plates 24 secured rigidly thereto by welds 25 and keys 26. The plates 24 are circular in configuration about a second axis 27 which forms an angle γ with respect to the first axis 14 and intersects axis 14. As is readily seen in the drawing, the circular crank plate 24 is mounted eccentrically on the input shaft 10 and obliquely with respect to the first axis 14 so as to create the angle γ.

A conical driving member, designated generally by the numeral 30 is journaled by bearings 31 to rotate on the crank plate 24 about the second axis 27. The conical driving member is substantially hollow and defines a space 33 which receives a portion of input shaft 10 and a portion of the output shaft 12. The conical driving member 30 has an inwardly projecting annulus 35 disposed at the end thereof opposite circular crank plate 24. The annulus 35 has a first conical track 36 thereon which engages a complementary conical track 37 formed on an end plate 39 of the housing 16. The conical track 37 is annular and has a bore therethrough which accommodates output shaft 12. Both the conical track 37 and conical 36 define right cones which each have an apex 38, which apex is coincident with the same point that the second axis 27 intersects the first axis 14. The surface 37 is provided on an end plate 39 of the housing, and the shaft 12 is jornalled in the plate by a bearing 40A

Accordingly, the conical driving member 30 rolls on the stationary conical surface 37 as the input shaft 10 rotates circular crank plate 24. Since the crank plate 24 is obliquely mounted on input shaft 10, the conical driving member 30 appears to wobble about the first axis 14 as it rotates on circular crank plate 24 about the second axis 27. Since conical surfaces 36, 37 have apexes 38 which coincide with the intersection point of first axis 14 and second axis 27, there is ordinarily no slippage between conical surfaces 36 and 37. Rather, there is pure rolling motion.

The annulus 35 has a second track 40 facing the space 33 defined within the conical driving member 30. The conical track 40 also has its apex at point 38. A conical track 45 is rigidly connected to the end of output shaft 12 and is held in engagement with the conical track 40. The apex of the conical track 45 coincides with point 38, which is the point of intersection of the first and second axes 14 and 27 and the apex of conical surfaces 36 and 37. As surface 36 of conical member 30 rolls on fixed surface 37, the conical surface 40 of the conical drive member 30 drives conical surface 45 to rotate around the axis 14 and thus rotates the output shaft 12. In the embodiment of Figure 1, the output shaft 12 rotates in the direction of arrow 48 which is in the same direction as the direction of shaft 10 represented by arrow 18.

During operation the drive 11 does not slip. In other words the surfaces 45-40 and 36-37 roll on one another with substantially pure line contact and no slippage.

The force with which the conical surfaces 40-45 and 36-37 engage one another may be determined in a number of ways. In the embodiment shown in Figure 1, this force is selected by a collar 47 which can be positioned against a thrust bearing 49 to apply a predetermined force between the conical surfaces. Other approaches may utilize a hydraulic system 50 for applying a force to the shaft 12 or perhaps a spring 51 used for applying an axial force to the shaft 12.

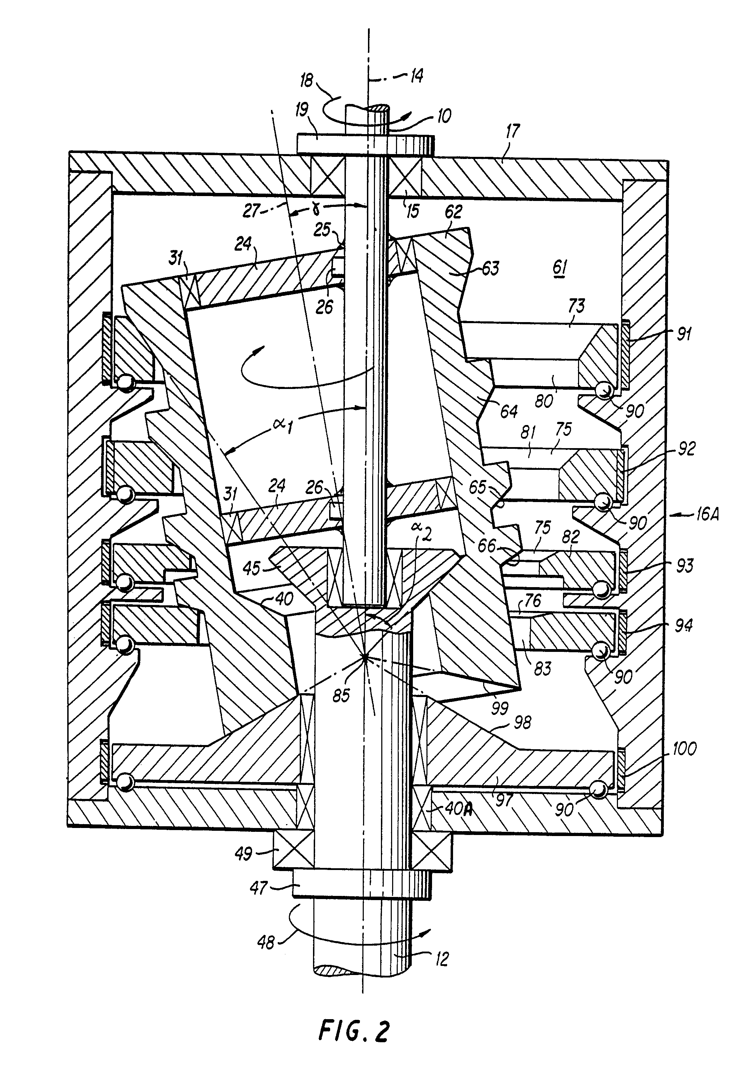

Referring now to Figure 2, there is shown a multiple speed drive, designated generally by the numeral 61. In the multiple speed drive 61 shown in Figure 2, parts similar to parts in Figure 1 have similar reference numerals. The multiple speed drive 61 differs from the single speed drive 11 in that in the multiple speed drive there is a conical member 62 which has a plurality of conical surfaces 63, 64, 65, and 66 thereon, which surfaces selectively roll on complimentary conical surfaces 73, 74, 75 and 76 on a plurality of annular conical members 80, 81, 82 and 83. The apexes of the surfaces 63-66 and 73-76 all intersect the intersection point of the first and second axis 14 and 27 at a point of coincidence 85.

The surfaces 63,64,65,66 lie at an angle of $\alpha$, to the axis 14.

Each of the annular conical members 80-83 are mounted on the housing 16A by bearing 90 and are normally free to rotate. Consequently, the annular members normally rotate as the conical drive member 62 rotates about second axis 27. In order to select a particular speed for the drive 61, one of the annular members 80-83 is prevented from rotating with respect to the housing 16A so as to be stationary with respect to the conical member 63. The conical member 63 will roll on the single annular member 80-83 which is being held stationary with respect to the housing 16A. All other annular members 80-83 are driven by the conical member 63 to rotate within the housing 16A.

The annular members 80-83 are selectively rendered stationary with respect to the housing 16A by tightening one of the bands 91, 92, 93 or 94. In Figure 2, band 92 is tightened to prevent annular member 81 from rotating while bands 91, 93 and 94 are loose. While bands are shown in the illustrated embodiment, one might stop rotation of an annular member 80-83 with a number of arrangements, such as for example, inserting a stop pin between the housing 16A and the selected annular member. Another approach is to fix the annular members so as to not rotate with respect to the housing 16A, but allow the annular members to be shifted axially with respect to the axis 14 so as to selectively move only one of the annular members into engagement with a surface selected from the surfaces 63-66 of conical drive member 62.

As with the embodiment of Figure 1, the embodiment of Figure 2 rotates the output shaft 12 by driving the surface 45 on the output shaft with conical surface 40 on the conical member 63.

In order to provide the multiple speed drive 61 with a reverse, an additional annular member 97 is provided having an annular surface 98 that abuts a corresponding annular surface 99 on the conical drive member 62. As is readily seen from Figure 2, the annular surfaces 98 and 99 have an angle $\alpha_2$ which is negative. Consequently, the shaft 12 will rotate in the opposite direction from the direction it would rotate in if one of the annular members 80-83 was selected. The annualar member 97, which provides the reverse direction, output may be stopped by applying a braking band 100 or may be stopped by utilizing a stop pin (not shown) extending between the housing 16A and the annular member 97. In the alternative, the annular member 97 may be restrained from rotation with respect to the housing 16A and simply moved axially into engagement with the surface 99 when a reverse direction is desired on output shaft 12.

For a transmission such as an automobile transmission, it has been determined that five forward speeds and a reverse might be provided with ratios "R" determined in accordance with formula:

$$R = \cfrac{1}{\cfrac{\cos \alpha_1 \quad \cos(\alpha_1 - \gamma)}{\cos \alpha_2 \quad \cos(\alpha_1 + \gamma)}} - 1$$

If $\gamma = 10°$

$\quad \alpha_2 = 45°$

Then:

| For | | R |
|---|---|---|
| 1st | $\alpha_1 = 15°$ | 4.26 |
| 2nd | $\alpha_1 = 20°$ | 3.89 |
| 3rd | $\alpha_1 = 30°$ | 3.23 |
| 4th | $\alpha_1 = 45°$ | 2.33 |
| 5th | $\alpha_1 = 66°$ | 1.00 |
| Reverse | $\alpha_1 = -60°$ | -10.1 |

These particular ratios are not illustrated in Figure 2. However, they are readily obtainable by using structures such as that suggested by Figure 2. In addition to five forward speeds and a reverse, the multiple speed transmission 61 could also provide both a "park" wherein the output shaft 12 is locked relative to the input shaft 14 and a "neutral". The park and neutral concepts are set forth in co-pending Patent Application Serial Number 480,144 filed March 29, 1983, now U.S. Patent Number 4,515,028, incorporated herein by reference.

The foregoing examples are merely illustrative of the invention, and the invention is to be limited only by the following amended claims.

## Claims

1. A mechanism for transmitting torque less than a predetermined torque, characterised by

a first shaft (10);

means (15) for mounting the first shaft for rotation about a first axis (14);

a first bearing surface (36), the first bearing surface having as a generatrix a radially extending first line intersecting the first axis (14) at a point (38) and rotating about the point through 360° at a constant angle with respect to the first axis (14);

a rotatable member (30) having a first conical surface (37) in engagement with the first bearing surface (36) along a line of contact which is coincident with the radially extending straight line which forms the generatrix of the first bearing surface (36), the conical surface also having an apex which is coincident with the point (38) on the first axis about which the generatrix rotates; the rotatable member (30) further having a second conical surface (40) which is continuously conical, the second conical surface having an apex which is also coincident with the point (38) on the first axis about which the generatrix rotates;

means (24,25,26) for mounting the rotatable member (30) to rotate about a second axis (27), which second axis is oblique with respect to the first axis (14) and coincident with the axis of the first conical surface, the second axis intersecting the first axis at a point on the first axis about which the generatrix rotates;

a second shaft (12);

means for mounting the second shaft (12) for rotation about the first axis;

a conical surface (45) on the second shaft, the conical surface on the second shaft being in engagement with the second conical surface (40) on the rotatable member, the conical surface on the second shaft having an apex which is coincident with the point (38) on the first axis about which the generatrix rotates,

and means (47;50;51) for urging the conical surfaces (36,37) together whereby the conical surfaces do not slip on one another as the first shaft (10) is rotated to drive the second shaft (12) so long as the torque is less than a predetermined torque.

2. The mechanism as claimed in claim 1, and characterised in that the first and second shafts (10,12) have first and second free ends (20,22), and in that means (21) are provided for journalling the free ends of the shafts to one another along the first axis (14) so as to stabilise the shafts.

3. The mechanism as claimed in claim 2, and characterised in that the rotatable member (30) defines a space (33) therein, which space receives the free ends of the first and second shafts (10,12); in that the second conical surface (40) on the rotatable member (30) faces the space and the conical surface (45) on the second shaft is within the space and abuts the second conical surface; and in that the first bearing surface (37) is exterior of the space and the second conical surface (36) faces away from the space (33).

4. The mechanism of claim 3, and characterised in that the first conical surface (36) on the rotatable member (30) and the first bearing surface (37) are sloped in a direction which is opposite in sign to the direction of the second conical surface (40) on the rotatable member (30) and the conical surface (45) on the second shaft (12) whereby the first and second shafts rotate in the same direction.

5. The mechanism as claimed in claim 1, and characterised in that the first bearing surface (37) is conical.

6. A multi-speed drive mechanism characterised by a first shaft (10);
means for mounting the first shaft for rotation about a first axis (14);
a rotatable member (62);
means (24,25,26) for rotatably mounting the rotatable member (62) on the first shaft obliquely with respect to the first axis (14) for rotation about a second axis 27), which second axis intersects the first axis to define a coincidence point (85);
a plurality of first conical surfaces (63,64,65,66) on the rotatable member which conical surfaces have different slopes and have apexes which are coincident with the coincidence point (85);
a second conical surface (40) on the rotatable member which second conical surface has an apex which is continously conical and is coincident with the coincidence point;
a plurality of conical bearing surfaces (73,74,75,76) disposed around the first axis with the apexes of the conical bearing surfaces intersecting the first axis (14); each of the conical bearing surfaces corresponding in slope to one of the first conical surfaces on the rotatable member (62);
speed selection means (91,92,93,94) for fixing a selected one of the bearing surfaces (73,74,75,76) in engagement with a corresponding first conical surface (63,64,65,66) on the rotatable member (62) whereby the rotatable member rolls on the selected one of the bearing surfaces;
a second shaft (12) aligned with the first shaft (10) and the first axis (14);
means (40A) for mounting the second shaft for rotation about the first axis,
a conical surface (45) on the second shaft in continous line contact with the second conical surface (40) on the rotatable member (85) and having an apex coincident with the coincidence point (85);
and means (47) for holding the conical surfaces in engagement whereby the input first shaft (10) drives the output second shaft to rotate at a speed and torque determined by which one of the first conical surfaces rolls on the corresponding conical bearing surface.

7. The mechanism as claimed in claim 6, and characterised in that one of the first conical surfaces (99) and the corresponding conical bearing surface (98) have equal slopes opposite in sign to the other first conical surfaces (63,64,65,66) and corresponding conical bearing surfaces (73,74,75,76) whereby the mechanism has a "reverse" speed.

8. The mechanism as claimed in claim 6, and characterised in that the speed selection means comprises bearing means (47) for holding the bearing members (80,81,82,83) in engagement with the first conical surfaces (63,64,65,66), whereby the bearing members rotate as the rotatable member (85) rotates; and in that means (91,92,93,94) are provided for enabling selective stopping of one of the bearing members so that the rotatable member (85) rolls on the stopped bearing member.

9. The mechanism as claimed in claim 6,7 or 8, and characterised in that the bearing members (80,81,82,83) are restrained from rotation and are axially slid selectively into engagement with the first conical members (63.64,65,66) one at a time to determine the speed ratio of the second shaft (12) relative to the first shaft (10

FIG.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 107 388 (FREDERICK MANUFACTURING CO.) * & US-426 875/82, & US-480 144/83 | 1-9 | F 16 H 13/06<br>F 16 H 15/56 |
| A | US-A-4 280 369 (VADETEC CORP.)<br><br>* Whole document * | 1,2,5,6 | |
| A | GB-A- 923 071 (NIKEX) | | |
| A | US-A-3 227 004 (M. ORAIN) | | |
| A | FR-A-1 227 486 (P. HEURTEL) | | **TECHNICAL FIELDS SEARCHED (Int. Cl.4)** |
| A | GB-A- 564 395 (R. BENNION) | | F 16 H 13/00<br>F 16 H 15/00 |
| A | DE-A-2 559 437 (H. HEYNAU GmbH) | | |

The present search report has been drawn up for all claims

| Place of search | Date of completion of the search | Examiner |
|---|---|---|
| THE HAGUE | 02-06-1987 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82